# DEMANDE DE BREVET EUROPEEN

(11) **EP 4 741 896 A1**
(43) Date de publication de la demande: **13.05.2026**
(21) Numéro de dépôt: 25213575.1
(22) Date de dépôt: 05.11.2025
(51) Int. Cl.: G02B 6/30

(54) **ADAPTATEUR POUR COUPLER LA LUMIERE D'UN CIRCUIT PHOTONIQUE**

(30) Priorité: 12.11.2024 FR 2412332
(71) Demandeur: Commissariat à l'Energie Atomique et aux Energies Alternatives, 75015 Paris (FR)
(72) Inventeur: CASTANY, Olivier, 38054 GRENOBLE CEDEX 09 (FR)
(74) Mandataire: Cabinet Beaumont

(57) **Abrégé**

La présente description concerne un adaptateur optique (100) destiné à servir d'interface sur un circuit optique intégré (101) pour produire un faisceau de lumière (108) élargi et ainsi faciliter le couplage avec des fibres optiques (509) et/ou un connecteur optique (505). L'adaptateur optique (100) comporte un miroir plan sur sa face supérieure et un miroir convergent sur sa face inférieure. Le faisceau de lumière (108) se propage en s'élargissant entre le circuit optique intégré (101) et le miroir convergent à l'intérieur de l'adaptateur optique (100) transparent, le trajet étant replié grâce au miroir plan supérieur.

## Description

### Domaine technique

La présente description concerne de façon générale le domaine des circuits optiques intégrés, également appelés circuits photoniques intégrés (« Photonic Integrated Circuit » - PIC, en anglais), et plus particulièrement le couplage de la lumière, ou couplage optique, entre un circuit optique intégré et une ou plusieurs fibres optiques.

### Technique antérieure

Des circuits optiques intégrés, en particulier des circuits photoniques sur silicium, peuvent combiner de nombreuses fonctions sur une même puce. Cela constitue un avantage, notamment en termes de réduction d'encombrement et de pertes optiques, par rapport à des montages réalisés en assemblant des composants discrets. Dans les circuits photoniques intégrés, la lumière est conduite dans des guides optiques de petite taille, d'une largeur typiquement inférieure au micromètre, ce qui permet de réaliser des circuits denses. Les circuits optiques intégrés communiquent en échangeant de la lumière avec des systèmes extérieurs, le couplage de cette lumière s'effectuant en tentant de limiter les pertes optiques. La problématique du couplage optique est particulièrement critique dans le cas de faisceaux optiques monomodes, destinés par exemple à être couplés dans des fibres optiques monomodes, en raison du faible diamètre des faisceaux de lumière mis en jeu.

Dans un circuit optique intégré, les interfaces de couplage des guides optiques sont en général de deux types :
1) des coupleurs verticaux à réseaux de diffraction (« vertical grating coupler », en anglais) fonctionnant grâce à la diffraction de la lumière sur une structure périodique réalisée en bout de guide optique pour envoyer la lumière vers le haut de la puce, et plus précisément selon un angle proche de la verticale de la puce, par exemple un angle de 8° (angle considéré dans un milieu d'indice de réfraction égal à celui du verre de silice), les réseaux de couplage permettant de former un faisceau de lumière présentant un diamètre de l'ordre de la dizaine de micromètres, ce qui est adapté aux fibres optiques monomodes couramment utilisées pour les communications optiques ; et
2) des coupleurs par la tranche typiquement situés au bord du circuit et constitués par un guide optique qui s'arrête au niveau de la tranche de la puce, la lumière sortant alors dans le prolongement du guide. La partie terminale du guide peut aussi présenter une structure qui élargit le mode optique avant sa sortie de la puce. La taille de faisceau est typiquement comprise entre deux et dix micromètres. Une variante du couplage par la tranche peut comporter une cavité, par exemple un puits, formée dans la face supérieure du circuit et permettant d'accéder à une sortie du guide optique. Un miroir situé dans la cavité en face de l'extrémité du guide optique permet dans ce cas d'extraire la lumière en la renvoyant dans une direction hors du plan de la puce, typiquement une direction proche de la verticale.

Les deux types d'interfaces susmentionnés permettent de former des faisceaux de lumière monomodes présentant un diamètre maximal proche de la dizaine de micromètres. Dans ce cas, un couplage direct avec des fibres optiques est possible mais le diamètre de faisceau reste petit, dans un sens où il nécessite de positionner les fibres optiques avec une précision de positionnement inférieure à plus ou moins 2 µm pour obtenir un taux de couplage acceptable. Cette précision de positionnement est délicate à atteindre et nécessite d'utiliser des machines dédiées, coûteuses et lentes. Pour faciliter le couplage et augmenter la tolérance du positionnement, il est souhaitable d'élargir le diamètre du faisceau de lumière sortant du circuit optique intégré jusqu'à plusieurs dizaines de micromètres, par exemple environ 50 µm, ce qui permet de relâcher la tolérance de positionnement à plus ou moins 10 µm et rend par conséquent l'assemblage moins délicat, permettant ainsi d'utiliser des machines moins coûteuses et plus rapides.

Plusieurs techniques ont été proposées pour coupler la lumière entre un circuit optique intégré et des fibres optiques avec un diamètre de faisceau élargi. Dans tous les cas, on considère un trajet optique suffisamment long pour que le faisceau lumineux puisse s'élargir jusqu'à atteindre la taille souhaitée. Les différentes techniques se distinguent par le schéma optique utilisé et par la portion du trajet optique sur laquelle le faisceau s'élargit.

Par ailleurs, le cas du couplage par la tranche conduit à attacher la fibre optique à la tranche de la puce, ce qui est mécaniquement fragile. Pour éviter cet inconvénient et attacher la fibre à la face supérieure de la puce tout en restant dans une configuration optique similaire au couplage par la tranche, on peut former une cavité depuis la face supérieure de la puce, ladite cavité présentant une paroi verticale devant l'extrémité du guide optique, de sorte que le faisceau qui sort du guide optique traverse cette paroi et pénètre dans la cavité. À l'intérieur de la cavité, un miroir de renvoi est disposé pour intercepter le faisceau et le dévier vers le haut pour le faire sortir par la face supérieure de la puce dans une direction proche de la verticale. La fabrication de ce miroir de renvoi peut être réalisée selon différentes techniques et constitue une difficulté industrielle.

Les brevets américains US 9817193, US 10209442, US 10459163 et US 10690848 et le brevet français FR 3066615 décrivent des circuits optiques intégrés où l'épanouissement du faisceau est réalisé dans l'épaisseur du substrat de la puce et où la face arrière de la puce comporte une fonction optique, lentille ou miroir. Cette solution permet d'intégrer la fonction d'épanouissement du faisceau à l'intérieur de la puce, sans élément supplémentaire. Toutefois, un inconvénient est que, pour traverser l'épaisseur de la puce entre la zone de guidage et la face arrière du substrat, la lumière doit traverser l'interface entre la silice et le silicium, or le fort contraste d'indice de réfraction entre ces matériaux implique qu'une partie non négligeable de la lumière, d'environ 15 %, est réfléchie à l'interface et perdue. Pour des raisons technologiques, il est délicat et coûteux de placer une couche antireflet à cet endroit. Un autre inconvénient est que la fonction optique souhaitée (lentille ou miroir, selon le cas) est réalisée sur la face arrière des puces. Or la réalisation de procédés sur la face arrière implique un coût de fabrication plus élevé car il faut protéger la face avant, puis la déprotéger ensuite. Un autre inconvénient est que l'épaisseur du substrat ne peut pas être choisie indépendamment du diamètre de mode souhaité, car c'est la longueur du parcours dans le substrat qui détermine la taille du mode émis, l'élargissement étant déterminé par la diffraction naturelle du faisceau.

La demande de brevet français FR 3050832, précédemment déposée par le demandeur, décrit un élément optique qui permet de prélever le faisceau dans une cavité, dans un cas de couplage par la tranche, à l'aide d'un réflecteur faisant fonction de miroir de renvoi (« turning mirror » en anglais). Cependant, l'élément optique décrit dans la demande susmentionnée n'a pas pour fonction d'élargir le faisceau de lumière.

Le brevet français FR 3124001, précédemment obtenu par le demandeur, présente un circuit optique intégré surmonté d'une puce transparente dans laquelle le faisceau se propage tout en s'élargissant. La puce transparente comporte un miroir plan sur sa surface supérieure qui permet de replier le faisceau vers un miroir de collimation fabriqué sur le circuit optique intégré, pour produire un faisceau de lumière élargi. L'intérêt de cette solution est que la tolérance de positionnement de la puce transparente est relâchée en comparaison avec les plus ou moins 2 µm requis pour un couplage direct aux fibres optiques. Dans le cas d'un couplage par la tranche, ce brevet FR 3124001 décrit la possibilité de fabriquer un miroir de renvoi dans le circuit optique en face de la sortie du guide. Cependant, la fabrication d'un miroir de renvoi dans le circuit optique, par exemple au fond d'une cavité, peut s'avérer délicate et les industriels qui produisent les circuits optiques intégrés peuvent renoncer à intégrer un tel miroir dans leur procédé de fabrication.

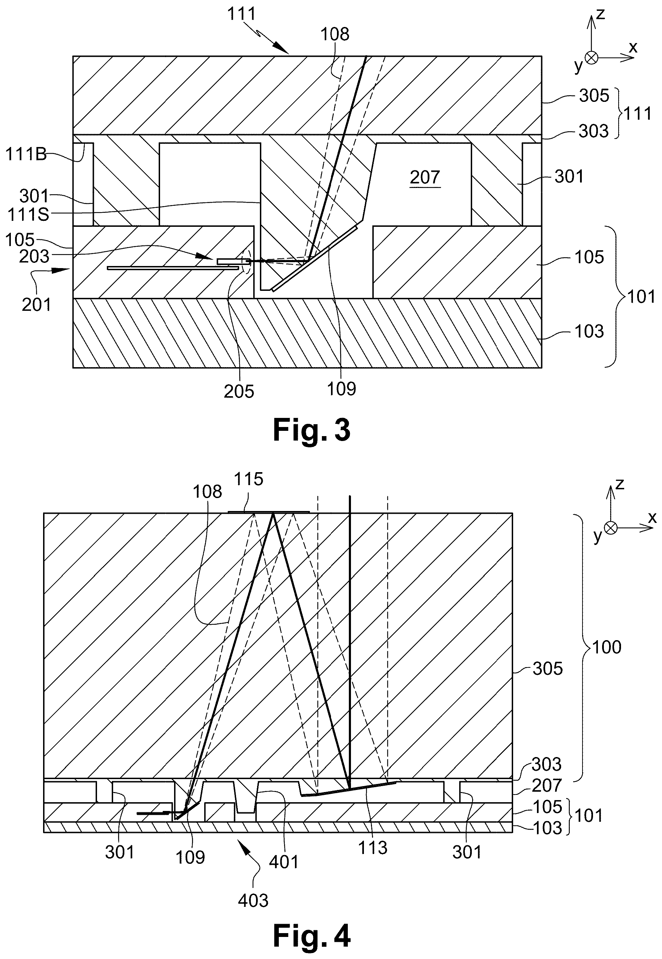

La demande de brevet américain US 2023/025139 déposée par la société Teramount décrit un schéma optique comprenant un premier élément optique focalisant la lumière sur une fibre optique, et un deuxième élément optique focalisant la lumière dans le port optique d'un circuit optique intégré. Ce système permet de réaliser une connexion entre la fibre et le circuit optique en bénéficiant d'une tolérance de positionnement relâchée. En effet, comme cela est décrit en relation avec les figures 4A et 4B de la demande susmentionnée, un déplacement du bloc supérieur est compensé par une variation de l'inclinaison des rayons entre le premier et le deuxième élément optique. Par exemple, un éloignement du bloc supérieur vers la droite est compensé par une inclinaison des rayons qui se rapproche de l'horizontale. Ce schéma optique requiert deux éléments optiques focalisants. Par ailleurs, il n'est pas destiné à produire un faisceau de lumière élargi et collimaté sortant du dispositif vers le haut.

### Résumé de l'invention

Il existe un besoin de pallier tout ou partie des inconvénients des dispositifs existants de couplage optique entre un circuit optique et une ou plusieurs fibres optiques.

Pour cela, un mode de réalisation prévoit un adaptateur optique comprenant :
- une région transparente ;
- un miroir convergent situé du côté d'une première face de la région transparente et tourné en regard d'une deuxième face de la région transparente, opposée à la première face ;
- un premier miroir plan situé du côté de la deuxième face de la région transparente et tourné en regard de la première face ;
- un premier port optique situé du côté de la première face et destiné à être positionné en vis-à-vis d'une extrémité d'un guide d'ondes d'un circuit optique intégré ; et
- un deuxième port optique situé du côté de la deuxième face,
l'adaptateur optique étant destiné à assurer une propagation d'un faisceau lumineux entre ladite extrémité du guide d'ondes et le deuxième port optique, le premier miroir plan et le miroir convergent étant agencés de sorte que le faisceau lumineux se propage entre les premier et deuxième ports optiques, à travers la région transparente, par réflexion sur le premier miroir plan et sur le miroir convergent, le faisceau lumineux présentant, au niveau du deuxième port optique, une taille supérieure à celle qu'il présente au niveau du premier port optique.

Selon un mode de réalisation, l'adaptateur comprend en outre un deuxième miroir plan situé sur une partie de la région transparente formant saillie depuis sa première face, ladite partie étant destinée à être insérée dans une cavité du circuit optique intégré.

Selon un mode de réalisation, l'adaptateur est dépourvu d'éléments optiques autres que la région transparente, le premier miroir plan et le miroir convergent.

Selon un mode de réalisation, la région transparente comprend en outre au moins un élément de positionnement mécanique de l'adaptateur par rapport au circuit optique intégré.

Selon un mode de réalisation, au moins un élément de positionnement mécanique forme saillie depuis la première face de la région transparente.

Selon un mode de réalisation, au moins un élément de positionnement mécanique comprend au moins un plot dépourvu de fonction optique destiné à prendre appui sur le circuit optique intégré.

Selon un mode de réalisation, ledit au moins un élément de positionnement mécanique comprend en outre au moins un doigt dépourvu de fonction optique et destiné à être inséré dans une cavité du circuit optique intégré.

Selon un mode de réalisation, les premier et deuxième ports optiques sont respectivement adaptés à recevoir et à émettre le faisceau lumineux.

Selon un mode de réalisation, la première face de la région transparente est parallèle à sa deuxième face, le premier miroir plan étant parallèle à la deuxième face.

Selon un mode de réalisation, le deuxième port optique est destiné à être positionné en vis-à-vis d'un connecteur optique dans lequel aboutit une extrémité d'une fibre optique.

Un mode de réalisation prévoit un dispositif optique comprenant un circuit optique intégré et l'adaptateur optique tel que décrit, l'adaptateur optique étant solidaire mécaniquement du circuit optique intégré.

Selon un mode de réalisation, l'adaptateur optique est fixé au circuit optique intégré par une couche de colle optiquement transparente.

Selon un mode de réalisation, le dispositif comprend en outre au moins un connecteur optique positionné en vis-à-vis du deuxième port optique et dans lequel aboutit l'extrémité d'une fibre optique.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue de côté et en coupe, schématique et partielle, d'un adaptateur optique assemblé à un circuit optique intégré selon un mode de réalisation, avec l'indication de notations géométriques utilisées dans la description ;
la figure 2 est une vue de détail de l'assemblage de la figure 1, au niveau d'une zone de prélèvement d'un faisceau dans une cavité ;
la figure 3 est une vue de côté et en coupe, schématique et partielle, d'une variante de l'adaptateur optique de la figure 1, comportant des appuis ;
la figure 4 est une vue de côté et en coupe, schématique et partielle, d'une autre variante de l'adaptateur optique de la figure 1, comportant un miroir courbe et un élément de positionnement ;
la figure 5 est une vue de côté et en coupe, schématique et partielle, d'un dispositif optique selon un mode de réalisation, présentant notamment l'utilisation d'un micro-connecteur optique ; et
la figure 6 est une vue de côté et en coupe, schématique et partielle, d'une variante du circuit optique intégré et de l'adaptateur optique, dans le cas d'un faisceau couplé à un réseau de couplage vertical.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les applications mettant en œuvre des circuits optiques intégrés et des dispositifs optiques comprenant de tels circuits n'ont pas été détaillées, les modes de réalisation décrits étant compatibles avec toutes ou la plupart des applications mettant en œuvre des circuits optiques intégrés et des dispositifs optiques comprenant de tels circuits, moyennant éventuellement des adaptations à la portée de la personne du métier à la lecture de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

Sauf précision contraire, l'expression « en contact avec » signifie « en contact mécanique avec ».

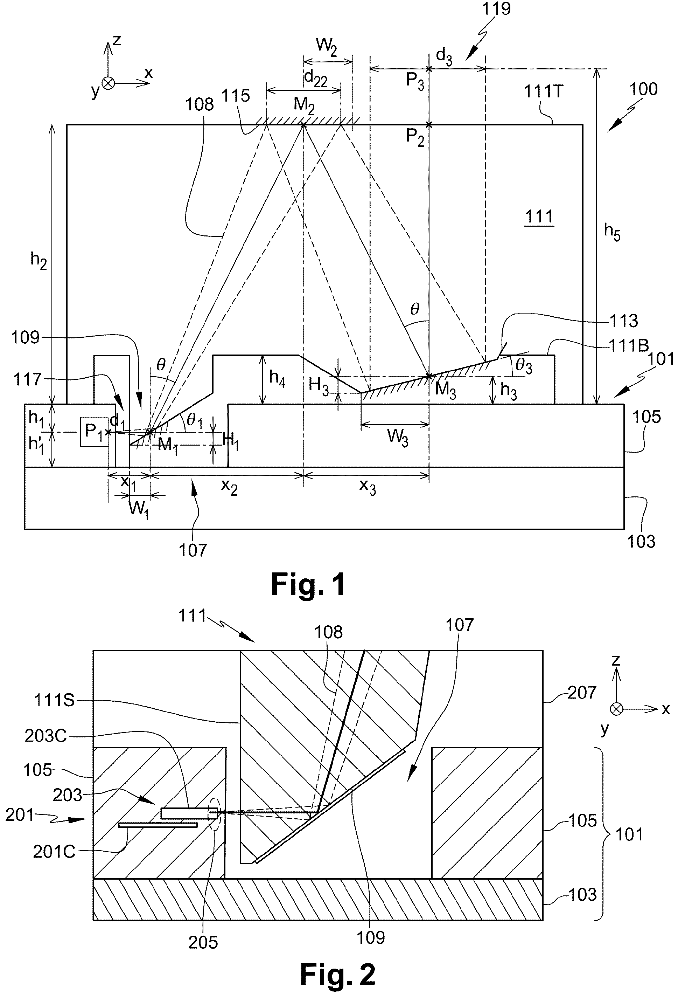

La figure 1 est une vue de côté et en coupe, schématique et partielle, d'un adaptateur optique 100 assemblé à un circuit optique intégré 101, aussi appelé circuit photonique intégré 101 ou puce photonique 101, selon un mode de réalisation.

Le circuit optique intégré 101 est par exemple un circuit photonique sur silicium, c'est-à-dire un circuit optique formé sur un substrat 103 en silicium. À titre de variante, le substrat 103 peut être en un matériau différent du silicium, par exemple en un matériau semiconducteur III-V, en carbure de silicium, etc.

Le circuit optique intégré 101 peut mettre en œuvre une ou plusieurs fonctions élémentaires (non détaillées sur les figures), choisies par exemple parmi :
- une fonction de modulation électro-optique de lumière ;
- une fonction de photodétection, par exemple au moyen d'une photodiode ;
- une fonction de filtrage de longueur d'onde ;
- une fonction de routage optique ; et
- une fonction de conduction électrique.

Dans l'exemple représenté, la ou les fonctions élémentaires sont mises en œuvre par un ou plusieurs composants élémentaires formés dans une région transparente 105 située à la surface du circuit optique intégré 101. La région transparente 105 peut être homogène, c'est-à-dire constituée d'un seul matériau transparent, ou inhomogène, c'est-à-dire constituée de plusieurs matériaux transparents différents, comportant éventuellement des cavités ou des zones d'air. La notion de transparence est considérée à une longueur d'onde de travail λ₀ du circuit optique intégré 101. Le ou les matériaux de la région transparente 105 sont par exemple choisis parmi le verre de silice, le nitrure de silicium, des polymères transparents à la longueur d'onde de travail λ₀, etc.

Les composants optiques élémentaires sont par exemple reliés entre eux par un ou plusieurs guides optiques comprenant typiquement une région centrale, ou cœur optique, entourée d'une région périphérique, ou gaine optique, la région périphérique présentant un indice de réfraction strictement inférieur à celui de la région centrale. À titre d'exemple, la région centrale est en silicium ou en nitrure de silicium et la région périphérique est en verre de silice. À titre de variante, d'autres types de circuits optiques 101 sont envisageables, par exemple des circuits comportant des guides optiques fabriqués en matériau semiconducteur III-V.

Un lien optique entre le circuit optique intégré 101 et l'extérieur du circuit est réalisé à l'aide d'au moins un coupleur optique vertical à réseau de diffraction et/ou d'au moins un coupleur optique par la tranche.

La figure 1 illustre plus particulièrement le cas d'un couplage par la tranche. À titre d'exemple, le diamètre de mode peut avantageusement être élargi en transférant la lumière dans un guide en nitrure de silicium de faible épaisseur, pour lequel le diamètre de mode d₁ est par exemple égal à environ 9,0 µm. Dans le cas d'un faisceau monomode, on entend par « diamètre de mode » un diamètre pour lequel l'intensité lumineuse est réduite d'un facteur 1/e², où « e » représente l'exponentielle, par rapport au centre du faisceau. Le faisceau est par exemple de forme gaussienne.

La région transparente 105 présente par exemple une épaisseur choisie de sorte à contenir en totalité le mode optique du coupleur. À titre d'exemple, l'axe du faisceau est situé à une profondeur h₁ égale à environ 7,0 µm sous la face supérieure du circuit optique intégré. Une cavité 107 est par exemple formée en face du coupleur par la tranche pour pouvoir accéder au faisceau et le prélever. La cavité 107 présente par exemple une profondeur h'₁ sous l'axe du faisceau égale à environ 7,0 µm. On note P₁ un point au centre du faisceau à l'extrémité du coupleur par la tranche, à partir duquel la lumière commence à diverger.

L'adaptateur optique 100 est assemblé sur le circuit optique 101 et permet de produire un faisceau de lumière 108 élargi et collimaté dirigé vers le haut, dans l'orientation de la figure 1. En figure 1, le faisceau 108 comporte un axe optique symbolisé par un trait plein et une enveloppe symbolisée par deux traits en pointillé situés de part et d'autre de l'axe optique du faisceau 108. Dans l'exemple illustré, l'adaptateur comprend un miroir de prélèvement 109 destiné à être inséré dans la cavité 107 pour prélever le faisceau sortant du coupleur par la tranche et l'orienter dans une direction proche de la verticale. Le miroir 109 est, dans cet exemple, un miroir plan. En figure 1, on note M₁ le point d'intersection de la surface du miroir 109 avec l'axe optique du faisceau 108 issu du coupleur, et on considère une orientation du miroir 109 telle que l'axe optique P₁M₁, initialement horizontal, se retrouve, après réflexion sur le miroir 109, orienté d'un angle θ égal à environ 16,0° par rapport à la verticale. Pour obtenir l'angle θ, on incline le miroir de prélèvement 109 d'un angle θ₁ égal à 45° - θ/2, c'est-à-dire égal, dans cet exemple, à environ 37,0°.

L'assemblage mécanique et optique de l'adaptateur 100 sur le circuit 101 est par exemple obtenu au moyen d'une colle optique transparente. La colle présente de préférence un indice de réfraction proche de celui de la région transparente 105, dans le but de limiter les réflexions parasites aux interfaces entre les matériaux.

Par ailleurs, l'adaptateur 100 est avantageusement réalisé avec des matériaux transparents présentant un indice de réfraction proche de celui du matériau de la région transparente 105, par exemple du verre de silice. Dans la description qui suit, on considère, pour simplifier, que les indices de réfraction vus par le faisceau lumineux 108 sont tous égaux à celui du verre de silice. Toutefois, en pratique, on peut utiliser des matériaux présentant des indices de réfraction différents en prenant en compte les angles de réfraction et les pertes dues aux réflexions parasites sur les interfaces. Des outils logiciels de simulation optique, tels que le logiciel connu sous la dénomination commerciale « Zemax », peuvent par exemple être utilisés à cette fin.

Selon un mode de réalisation, l'adaptateur optique 100 comprend une région transparente 111, un miroir convergent 113, par exemple un miroir concave, situé du côté d'une première face 111B de la région transparente 111 (la face inférieure de la région 111, dans l'orientation de la figure 1) et un miroir plan 115 situé du côté d'une deuxième face 111T de la région transparente 111 (la face supérieure de la région 111, dans l'orientation de la figure 1) opposée à la face 111B. Les miroirs plan 115 et convergent 113 sont agencés de sorte que le faisceau 108 soit réfléchi vers la face 111B par le miroir plan 115 puis réfléchi et collimaté par le miroir convergent 113 en direction de la face 111T. On note M₂ le point d'intersection de l'axe optique du faisceau 108 avec le miroir plan 115 sur la face 111T et M₃ le point d'intersection de l'axe optique avec la surface du miroir convergent 113. Entre la sortie du coupleur par la tranche et le miroir convergent 113, le faisceau s'élargit au cours de son trajet sur une longueur totale L égale à P₁M₁ + M₁M₂ + M₂M₃.

Le miroir convergent 113 permet de réfléchir et de collimater le faisceau 108. Il permet aussi de modifier l'inclinaison de l'axe optique s'il est fabriqué de sorte que la surface du miroir convergent 113 forme, par rapport à l'horizontale, un angle θ₃ au niveau du point M₃. Le miroir convergent est alors dit incliné d'un angle θ₃. Dans l'exemple représenté, on souhaite obtenir un faisceau dirigé perpendiculairement à la face 111T. On choisit par exemple pour cela une inclinaison donnée par θ₃ = θ/2 = 8,0°.

Après réflexion sur le miroir convergent 113, le faisceau de lumière collimaté sort de l'adaptateur 100 par sa face supérieure. On note P₂ le point où l'axe optique du faisceau provenant du miroir convergent intersecte la face 111T de l'adaptateur 100.

Dans le milieu optique extérieur, situé au-dessus de l'adaptateur 100, on note P₃ la position du centre du col du faisceau gaussien 108 et d₃ son diamètre mesuré perpendiculairement à l'axe optique. Dans l'exemple représenté, le milieu optique au-dessus de l'adaptateur 100 est de l'air. Si le faisceau incident M₃P₂ n'est pas perpendiculaire à la face 111T, alors le faisceau réfracté dirigé selon l'axe optique P₂P₃ présente un changement de direction en traversant cette surface. Dans l'exemple illustré, l'inclinaison du miroir convergent 113 est choisie pour orienter le faisceau perpendiculairement à la face supérieure 111T de l'adaptateur 100, de sorte que l'axe optique reste perpendiculaire à cette surface dans le milieu de sortie au-dessus de l'adaptateur 100. Par ailleurs, en se référant à la notion d'image réelle et virtuelle en optique, on peut dire que le point P₃ est une image réelle dans le milieu de sortie s'il est situé au-dessus de la face 111T, et qu'il s'agit d'une image virtuelle dans le milieu de sortie s'il est situé en dessous de la face 111T. Dans l'exemple de réalisation représenté en figure 1, le point P₃ est une image réelle.

Dans l'exemple représenté, l'adaptateur 100 présente un premier port optique 117, ou port de lumière 117, situé du côté de la face 111B et un deuxième port optique 119 situé du côté de la face 111T. Le port optique 117, dit port optique ou port de lumière inférieur, est défini par la surface centrée sur le point P₁ qui propage le faisceau 108 de diamètre d₁. Le port optique 119, dit port optique ou port de lumière supérieur, est défini par la surface centrée sur le point P₃ qui propage le faisceau 108 de diamètre d₃. L'adaptateur 100 assure la propagation du faisceau lumineux 108 entre le port de lumière inférieur 117 et le port de lumière supérieur 119. La propagation peut s'effectuer depuis le port inférieur 117 vers le port supérieur 119 ou depuis le port supérieur 119 vers le port inférieur 117 avec la même forme de faisceau, selon le principe de retour inverse de la lumière. À titre d'exemple, le port supérieur 119 présente un diamètre d₃ au moins cinq fois supérieur au diamètre d₁, par exemple égal à environ 50 µm. Ce diamètre est compatible avec des micro-connecteurs optiques enfichables disponibles dans le commerce.

À titre d'exemple, l'adaptateur 100 est fabriqué sur une plaquette en verre de silice en mettant en œuvre les étapes successives suivantes :
a) fabrication du miroir plan 115 par photolithographie puis gravure d'une couche métallique, par exemple en aluminium ;
b) protection du miroir plan 115 par une couche de silice ;
c) retournement de la plaquette et collage sur un substrat de report temporaire, ou poignée ;
d) amincissement et polissage de la plaquette puis réalisation des formes tridimensionnelles définissant le miroir convergent 113 et le miroir de prélèvement 109 ;
e) métallisation des surfaces des miroirs 113 et 109, par exemple par dépôt d'une couche d'aluminium du côté de la face 111B suivie d'opérations de photolithographie puis gravure de cette couche ; et
f) retournement de la plaquette sur un support adhésif mou, retrait du substrat de report temporaire et découpe de la plaquette en puces formant chacune un adaptateur optique 100.

La technique utilisée pour définir les formes tridimensionnelles du miroir convergent 113 et du miroir de prélèvement 109 est par exemple une photolithographie à niveaux de gris dans une résine photosensible, suivie par exemple d'une gravure de transfert dans le verre de silice. Alternativement, c'est une lithographie mettant en œuvre une technique dite de « Nano-Imprint Lithography » utilisant un moule tridimensionnel. Alternativement, c'est une inscription directe par laser suivie d'une gravure humide, technique dénommée « Selective Laser Etching » en anglais.

L'assemblage de l'adaptateur 100 sur le circuit optique intégré 101 est par exemple effectué à l'aide d'un équipement de report de puces, par exemple de type « pick-and-place », et d'une colle optiquement transparente. Une colle optique qui polymérise sous l'action d'un rayonnement ultra-violet est par exemple utilisée pour solidariser mécaniquement l'assemblage après sa mise en place. De préférence, on utilise une colle capable de résister ultérieurement à une température de l'ordre de 250 °C pendant environ 2 min, pour que l'assemblage constitué du circuit optique 101 et de l'adaptateur 100 puisse résister au passage dans un four de brasage (« solder reflow oven », en anglais) à 250 °C. Les matériaux constitutifs de l'adaptateur 100 sont de préférence sélectionnés pour résister aux mêmes contraintes.

Un exemple de dimensionnement est décrit ci-après en relation avec la figure 1. Cet exemple n'est toutefois pas limitatif, et d'autres dimensionnements sont accessibles à la personne du métier à partir des indications de la présente description.

Les calculs sont présentés pour une longueur d'onde de travail λ₀ = 1,310 µm (longueur d'onde mesurée dans le vide), mais pourront être transposés à toute autre longueur d'onde. On se place dans la situation où les matériaux traversés présentent tous l'indice de réfraction n du verre de silice à cette longueur d'onde, c'est-à-dire n = 1,447.

On considère que le port de lumière inférieur 117 est centré sur le point P₁ situé à la profondeur h₁ sous la face supérieure du circuit optique intégré 101, par exemple h₁ = 7,0 µm. On considère que le port 117 émet un faisceau monomode gaussien circulaire de diamètre d₁ = 9,0 µm. La longueur de Rayleigh de ce faisceau dans un milieu d'indice n est z_{R} = n π (d₁/2)² / λ₀ ≃ 70,3 µm. La divergence totale du faisceau, évaluée à 1/e² en intensité, est Δθ ≃ d₁ / z_{R} ≃ 128 mrad ≃ 7,3°.

On choisit une inclinaison d'angle θ = 16,0° pour l'axe optique du faisceau lumineux 108 par rapport à la verticale lors de son trajet entre M₁, M₂ et M₃.

Le miroir de prélèvement 109 est un miroir plan incliné d'un angle θ₁ = 45° - θ/2 = 37,0°, de sorte que l'axe optique initialement horizontal est réfléchi avec un angle θ par rapport à la verticale. On choisit une distance x₁ = 10 µm entre P₁ et M₁.

On fabrique l'adaptateur 100 de sorte que sa face supérieure 111T soit à une altitude h₂ = 189,8 µm au-dessus de la face supérieure du circuit optique intégré 101. Le miroir plan 115 qui replie le faisceau lumineux 108 se trouve sur la face 111T.

Le miroir convergent 113 est fabriqué avec une inclinaison θ₃ = θ/2 = 8,0°, de sorte que l'axe optique du faisceau 108 se retrouve perpendiculaire à la surface supérieure de l'adaptateur sur le trajet M₃P₂ après la réflexion. On choisit pour le point M₃ une altitude h₃ = 8,3 µm au-dessus de la surface du circuit optique intégré 101. Dans ce cas, la longueur du trajet optique entre P₁ et M₃ est L = P₁M₁ + M₁M₂ + M₂M₃ = x₁ + (2 h₂ + h₁ - h₃) / cos(θ) ≃ 403,5 µm. La distance horizontale entre M₁ et M₂ vaut x₂ = (h₂ + h₁) tan(θ) ≃ 56,4 µm et celle entre M₂ et M₃ vaut x₃ = (h₂ - h₃) tan(θ) ≃ 52,0 µm.

On choisit un miroir convergent 113 de forme sphérique et de distance focale f = 394,0 µm, ce qui correspond à un rayon de courbure R = 2 f ≃ 788,0 µm. On note δs l'écart, le long de l'axe optique, entre le point source P₁ et le point focal objet du miroir convergent, δs = L - f = 9,5 µm. L'image du port de lumière inférieur 117 formée par le miroir convergent 113 dans le milieu au-dessus de l'adaptateur 100 présente un col dont le diamètre est : d₃ = d₁ f (z_{R}² + δs²)^{-1/2} ≃ 50,0 µm. Ce diamètre de faisceau de 50 µm est compatible avec des micro-connecteurs optiques enfichables disponibles chez les fabricants de connecteurs. La divergence totale du faisceau sortant dans l'air, évaluée à 1/e² en intensité, est donnée par Δθ₃ = 4 λ₀ / (π d₃) ≃ 33 mrad ≃ 1,9°. On obtient donc un faisceau plus large, passant de 9 à 50 µm de diamètre, et de divergence plus faible, passant de 7,3 à 1,9°.

Pour plus de précision, on peut tenir compte du fait que le faisceau lumineux arrive sur le miroir convergent 113 avec un angle d'incidence oblique θ/2 par rapport à l'axe du miroir 113. Ainsi, à titre de variante, on peut choisir pour le miroir 113 une surface ellipsoïdale de rayon R₁ = 2 f / cos(θ/2) dans le plan d'incidence (plan de la figure 1) et R₂ = 2 f cos(θ/2) dans le plan sagittal (perpendiculaire au plan d'incidence et contenant l'axe optique). De manière générale, la personne du métier est capable de déterminer la surface idéale en utilisant un logiciel de conception optique.

Dans la situation décrite, le col du faisceau 108 vu dans la silice après le miroir convergent 113 est situé sur l'axe optique après le centre M₃ du miroir 113 à une distance s' = 1/(1/f - 1/(L + z_{R}²/ δs)) ≃ 689 µm. On déduit l'altitude h₅ du col du faisceau vu dans l'air au-dessus de la surface supérieure de l'adaptateur : h₅ = (s'- h₂ + h₃) /n + h₂ ≃ 540 µm. Cette valeur est l'altitude du port de lumière supérieur 119, centré sur le point P₃, au-dessus de la face supérieure 111T de l'adaptateur 100. Dans ce cas, si on assemble un micro-connecteur optique, ce dernier est positionné de sorte que son entrée de lumière coïncide avec le port de lumière supérieur 119 de l'adaptateur 100.

Par ailleurs, l'encombrement des formes géométriques est conçu pour permettre d'assembler l'adaptateur 100 sur le circuit optique intégré 101 sans collision entre les surfaces. Pour le miroir de prélèvement 109, on note respectivement W₁ et H₁ la largeur et la hauteur de la partie du miroir 109 à gauche du point M₁. On choisit H₁ = 5,0 µm pour laisser une marge h'₁ - H₁ = 2,0 µm entre le bas du miroir de prélèvement 109 et le circuit optique intégré 101. On déduit W₁ = H₁ / tan(θ₁) ≃ 6,6 µm. Pour la partie du miroir 109 à droite du point M₁, il n'y a pas de contrainte géométrique si la cavité 107 est assez large, c'est-à-dire si elle est plus large que x₁ + h₁ / tan(θ₁) ≃ 16, 6 µm. Dans ce cas, le miroir de prélèvement 109 peut être plus étendu à droite de M₁ qu'à gauche. On choisit par exemple une cavité 107 plus large que 20 µm.

Pour le miroir convergent 113, on note respectivement W₃ et H₃ la largeur et la hauteur de la partie du miroir 113 à gauche du point M₃. Le diamètre du faisceau lumineux 108 arrivant sur le miroir convergent 113 est donné par : d₃₃ = d₁ (1 + (L/z_{R})² )^{1/2} ≃ 52,5 µm. Pour réfléchir la majorité du faisceau incident, on choisit W₃ = 1,5 d₃ / 2 = 37,5 µm. On déduit H₃ = W₃ tan (θ₃) ≃ 5, 3 µm. La marge entre le bas du miroir convergent 113 et la face 111B de l'adaptateur 100 est donc h₃ - H₃ ≃ 3,0 µm, ce qui évite une collision avec la surface 111B. La partie du miroir convergent 113 à droite du point M₃ est plus haute et il n'y a donc pas de risque de collision avec le circuit optique intégré 101. En choisissant une distance h₄ = 15,0 µm entre la surface inférieure 111B de l'adaptateur 100 et la face supérieure du circuit optique intégré 101, la largeur du miroir 113 à droite du point M₃ peut être de (h₄-h₃) / tan(θ₃) ≃ 47,7 µm. Le miroir convergent 113 peut ainsi être plus étendu à droite de M₃ qu'à gauche.

Comme le miroir de prélèvement 109 est tronqué sur le bas, une partie de la lumière est perdue car elle n'est pas réfléchie. La troncature se fait à une distance x₁₁ = x₁ - W₁ ≃ 3,4 µm du point source P₁, distance à laquelle le diamètre du faisceau lumineux 108 est : d₁₁ = d₁ (1 + (x₁₁/z_{R})² )^{1/2} ≃ 9,0 µm. La troncature à la distance H₁ sous le point M₁ cause donc une perte optique donnée par : lc₁ = 1/2 (1 + erf(-√2 (2 H₁)/d₁₁)) ≃ 1,3 %, où « erf » est la fonction d'erreur de Gauss.

De façon similaire, le faisceau lumineux 108 arrivant sur le miroir convergent 113 est tronqué à gauche à une distance W₃ du point M₃, causant une perte optique lc₃ ≃ 1/2 (1 + erf(-√2 (2 W₃)/d₃₃)) ≃ 0,2 % (l'effet de l'inclinaison θ₃ du miroir convergent 113 est négligeable dans ce calcul). Comme la partie du miroir convergent 113 située à droite de M₃ est plus étendue qu'à gauche, la perte de lumière à droite du miroir convergent 113 est plus faible et est, dans ce cas, négligeable.

Le repliement du faisceau lumineux 108 se fait par réflexion sur le miroir plan 115 situé sur la face supérieure 111T de l'adaptateur 100. L'axe optique coupe le miroir plan 115 au point M₂ et la distance de propagation entre P₁ et M₂ est : L₂ = x₁ + (h₂ + h₁) / cos(θ) ≃ 215 µm. Le diamètre du faisceau 108 est alors donné par d₂ = d₁ (1 + (L₂/z_{R})² )^{1/2} ≃ 28,9 µm. Sa longueur dans la direction horizontale est d₂₂ = d₂ / cos(θ) ≃ 30,1 µm. Le miroir plan 115 peut être étendu à gauche de M₂ sans limitation immédiate. Par contre il ne peut pas s'étendre à droite de M₂ sans limite car il bloquerait une partie du faisceau sortant de l'adaptateur 100 après la réflexion sur le miroir convergent 113. On choisit alors une largeur W₂ = 20,5 µm pour le bord du miroir plan 115 à droite du point M₂. Dans cette situation, une partie de la lumière n'est pas réfléchie par le miroir plan 115, ce qui donne lieu à une perte lc₂ = 1/2 (1 + erf(-√2 (2 W₂)/d₂₂)) ≃ 0,3 %. En même temps, une partie de la lumière sortant à travers la face supérieure 111T est bloquée par le miroir plan 115, donnant lieu à une perte lc₄ ≃ 1/2 (1 + erf(-√2 (2 (x₃-W₂)/d₃)) ≃ 0,6 % (le diamètre du faisceau 108 sur la face supérieure 111T a été approximé par d₃, pour ne pas alourdir les notations).

Au total, les pertes géométriques mentionnées valent lc₁ + lc₂ + lc₃ + lc₄ ≃ 2,4 %, ce qui est très faible pour la plupart des applications. À cela s'ajoutent les pertes par réflexion sur le métal des miroirs, qui sont de l'ordre de 3,1 % pour une réflexion sur une surface en aluminium. Pour trois réflexions, la perte cumulée est lₘ ≃ 9,3 %. L'utilisation d'un métal réfléchissant mieux la lumière, comme l'or ou l'argent, permet de diminuer la valeur de ces pertes.

Par ailleurs, l'emprise totale dans la direction x pour réaliser l'ensemble du système optique est : x₁ + x₂ + x₃ + d₃/2 ≃ 144 µm, ce qui est compact.

La sensibilité du système optique aux variations de la géométrie de l'adaptateur 100 et de son positionnement sur le circuit optique intégré 101 est détaillée ci-dessous en relation avec la figure 1. On considère un adaptateur 100 qui propage la lumière entre le circuit optique intégré 101 et un micro-connecteur optique (non détaillé en figure 1), et on détermine la tolérance permettant une transmission de plus de 90 % pour chaque erreur prise individuellement.

Dans le cas d'une translation de l'adaptateur 100 par rapport au circuit optique intégré 101, le port optique inférieur 117 lié à l'adaptateur 100 se décale par rapport au port de lumière présent dans le circuit optique intégré 101. En fonction des décalages dans les trois directions x, y et z de l'espace, le coefficient de transmission de la lumière vaut T ≃ (1 + δx²/(2 z_{R})²) exp(-4 (δy² + δz²)/d₁²). On a supposé dans cette expression que δx est très inférieur à z_{R}, ce qui est une condition facile à réaliser en pratique. On déduit que les tolérances de positionnement sont δy(90 %) = δz(90 %) = 1,5 µm et δx(90 %) = 47 µm. On constate que le positionnement est plus critique selon les directions y et z. Selon la direction y, le bon alignement peut être aidé par des éléments de positionnement comme des doigts ou des languettes destinés à s'insérer dans des cavités complémentaires s'étendant dans l'épaisseur du circuit optique intégré 101 depuis sa face supérieure. Selon la direction z, le bon positionnement peut être assuré par des appuis dont la hauteur est choisie pour que le port de lumière inférieur 117 de l'adaptateur 100 se retrouve à la même hauteur que le port de lumière du circuit optique intégré 101.

Une erreur sur l'angle θ₁ se traduit principalement par une inclinaison du port optique inférieur d'un angle 2 δθ₁ par rapport à la verticale, de sorte que le coefficient de transmission vaut T ≃ exp(- 4 (2 δθ₁ / Δθ)²). On en déduit δθ₁(90 %) = 10,3 mrad = 0,59°.

Une erreur sur l'angle θ₃ peut être prise en compte en considérant le décalage δz = 2 L δθ₃ du port de lumière inférieur 117 par rapport au circuit optique intégré. On a T ≃ exp(- 4 (2 L δθ₃ / d₁)²) et on déduit δθ₃(90 %) = 1,8 mrad = 0,10°. Une telle précision dans la fabrication du miroir de renvoi 109 est accessible par exemple par la technique de photolithographie à niveaux de gris, par la technique de « Nano-Imprint Lithography » ou par la technique de « Selective Laser Etching ».

Une erreur sur l'épaisseur h₂ de l'adaptateur se traduit par un décalage δz = 2 L δh₂ sin(θ) du port de lumière inférieur 117 par rapport au circuit optique intégré 101. On a T ≃ exp(- 4 (2 δh₂ sin(θ) / d₁)²) et on déduit δh₂(90 %) = 2,6 µm. En pratique, il est possible d'amincir et de polir une plaquette en verre de silice en maîtrisant l'épaisseur avec une précision meilleure que cette tolérance.

Le circuit optique intégré 101 équipé de l'adaptateur 100 selon la présente invention peut être utilisé avec un connecteur optique fibré prévu pour accepter un faisceau de lumière élargi. Il s'agit par exemple d'un connecteur présentant des microlentilles au bout des fibres optiques (disponible chez Senko) ou bien une ferrule qui dévie la lumière des fibres optiques à l'aide d'un miroir de renvoi courbe, agissant à la fois comme renvoi d'angle et pour la collimation du faisceau (disponible chez USConec). Selon la géométrie du connecteur optique envisagé, son orientation par rapport à l'adaptateur 100 et au circuit optique intégré 101 est adaptée pour que les axes optiques soient alignés.

La présente invention permet d'utiliser tout type de connecteur optique. Il suffit de dimensionner l'épaisseur de l'adaptateur 100 et son miroir convergent 113 pour produire un faisceau élargi avec un diamètre égal au diamètre de mode nominal du connecteur optique envisagé et positionné à l'altitude requise par ce connecteur.

En résumé, l'adaptateur 100 présente de faibles pertes optiques et peut être associé à différents connecteurs du commerce, sans être lié à un connecteur spécifique au cours de la conception autrement que par le diamètre et la position du col du faisceau attendu par ce connecteur. Par ailleurs, l'utilisation de l'adaptateur optique 100 permet de simplifier la conception et la réalisation du circuit optique intégré 101, dans la mesure où les fonctions optiques liées à l'élargissement du faisceau sont regroupées exclusivement dans l'adaptateur 100.

La figure 2 est une vue de détail de l'assemblage du connecteur optique 100 de la figure 1 avec le circuit optique intégré 101.

Dans l'exemple représenté, la cavité 107 est formée dans le circuit optique intégré 101 en gravant la région transparente 105 jusqu'au substrat 103 qui sert de couche d'arrêt de gravure. Cet exemple n'est toutefois pas limitatif, la gravure pouvant, à titre de variante, être arrêtée avant d'atteindre le substrat 103, la cavité 107 présentant alors une profondeur strictement inférieure à l'épaisseur de la région transparente 105. La région transparente 111 de l'adaptateur optique 100 comprend une partie 111S formant saillie depuis la face inférieure 111B de la région 111, la partie 111S étant destinée à être insérée dans la cavité 107. Le miroir 109 est situé sur la partie 111S formant saillie. Cela permet de réaliser un couplage par la tranche d'un guide d'ondes 201 formé dans la région transparente 105 du circuit 101. Dans l'exemple représenté, le guide d'ondes 201 comprend une région centrale 201C, ou cœur, entourée d'une région périphérique, ou gaine, constituée par la région transparente 105. La région centrale 201C présente un indice de réfraction strictement supérieur à celui de la région périphérique 105. Par ailleurs, dans cet exemple, un autre guide d'ondes 203 est situé sur et à l'aplomb d'une extrémité du guide d'ondes 201 pour permettre de transférer la lumière depuis le guide d'ondes 201 vers un port de sortie 205 du circuit optique intégré 101 situé en vis-à-vis du miroir plan de prélèvement 109 de l'adaptateur optique 100. De manière analogue au guide d'ondes 201, le guide d'ondes 203 comprend une région centrale 203C, ou cœur, entourée d'une région périphérique, ou gaine, constituée par la région transparente 105. Le guide d'ondes 203 diffère par exemple du guide d'ondes 201 en ce qu'il propage un mode de diamètre supérieur. À titre de variante, le guide d'ondes 203 peut être omis.

Dans l'exemple illustré, une région transparente 207, par exemple obtenue par polymérisation d'une couche de colle interposée entre le circuit optique intégré 101 et l'adaptateur 100, comble les espaces libres s'étendant entre la face supérieure du circuit 101 et la face inférieure 100B de l'adaptateur 100.

La figure 3 est une vue de côté et en coupe, schématique et partielle, d'une variante de l'adaptateur optique 100 de la figure 1.

Dans l'exemple représenté, la région transparente 111 comprend en outre des éléments de positionnement mécanique 301, par exemple des plots dépourvus de fonction optique, formant saillie depuis la face inférieure 111B de la région 111 et destinés à prendre appui sur la face supérieure du circuit 101. Cela permet de régler la distance séparant l'adaptateur 100 du circuit 101 le long de l'axe vertical « z ».

Par ailleurs, dans cet exemple, la région transparente 111 comprend une partie inférieure 303 tournée en regard de la face supérieure du circuit 101 et une partie supérieure 305 opposée à la partie inférieure 303 et tournée vers l'extérieur. À titre d'exemple, la partie 305 est une plaque en verre de silice et la partie 303 est un polymère mis en forme par photolithographie à niveaux de gris ou par la technique de « Nano-Imprint Lithography ». À titre de variante, les parties 303 et 305 sont en un même matériau transparent, par exemple du verre de silice, et les surfaces sont par exemple formées par la technique de « Selective Laser Etching ».

Dans l'exemple représenté, le circuit optique intégré 101 présente le port optique de sortie 205 situé du côté de l'extrémité du guide d'ondes 203 en vis-à-vis de la cavité 107.

La figure 4 est une vue de côté et en coupe, schématique et partielle, d'une autre variante de l'adaptateur optique 100 de la figure 1.

Selon cette variante, la région transparente 111 comprend une partie 401 dépourvue de fonction optique, formant saillie depuis la face inférieure 111B de l'adaptateur 100 et destinée à être insérée dans une cavité 403 du circuit optique intégré 101. La partie 401 présente par exemple une forme de dent, de doigt ou de languette, et joue le rôle d'un élément de positionnement mécanique de l'adaptateur optique 100 par rapport au circuit optique intégré 101. La partie 401 permet de faciliter et/ou d'améliorer l'alignement de l'adaptateur 100 par rapport au circuit 101, notamment l'alignement le long de l'axe horizontal « x » ou l'alignement dans le plan horizontal « xy ».

Dans l'exemple représenté, la partie 401 dépourvue de fonction optique est formée dans la partie 303 de la région 111.

Bien qu'une seule partie 401 ait été représentée en figure 4, cet exemple n'est pas limitatif et l'adaptateur 100 peut bien entendu, à titre de variante, comprendre davantage de parties 401 dépourvues de fonction optique destinées à s'insérer dans des cavités préalablement formées dans la face supérieure du circuit 101.

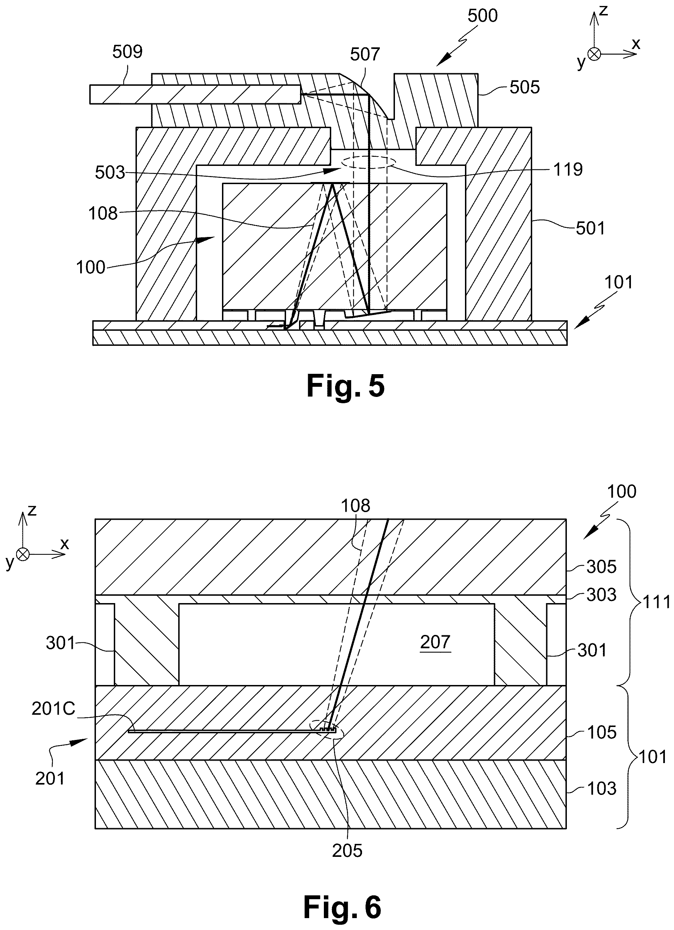

La figure 5 est une vue de côté et en coupe, schématique et partielle, d'un dispositif optique 500 selon un mode de réalisation.

Dans l'exemple représenté, le dispositif optique 500 comprend l'assemblage précédemment décrit en relation avec la figure 4 comportant le circuit optique intégré 101 et l'adaptateur optique 100. Le dispositif optique 500 comprend en outre un support 501 (« socket », en anglais), ou réceptacle, ou embase, solidaire de la face supérieure du circuit optique intégré 101 et entourant l'adaptateur optique 100. Le support 501 a notamment pour fonction de permettre le placement mécanique d'un micro-connecteur à l'endroit adéquat au-dessus de l'adaptateur optique 100. Dans cet exemple, le support 501 présente une ouverture située en vis-à-vis du port de lumière supérieur 119 de l'adaptateur optique 100. L'ouverture 503 permet de laisser passer le faisceau de lumière 108 propagé par l'adaptateur 100.

Dans l'exemple illustré, le dispositif optique 500 comprend en outre un connecteur optique 505, par exemple un micro-connecteur optique, enfiché dans l'ouverture 503 du support 501. Dans l'exemple représenté, le connecteur optique 505 comprend un miroir convergent 507, par exemple un miroir concave, permettant de renvoyer la lumière provenant de l'adaptateur optique 100 vers une fibre optique 509 dont une extrémité aboutit dans le connecteur optique 505. Dans cet exemple, le conjugué optique du port optique 119 par l'intermédiaire du miroir convergent 507 est situé sur l'extrémité de la fibre optique 509.

Un avantage du dispositif optique 500 tient au fait que l'utilisation d'un faisceau lumineux 108 élargi au niveau du port optique 119 permet d'augmenter la tolérance de positionnement du connecteur optique 505, de sorte qu'il est possible d'utiliser un connecteur optique enfichable dans le réceptacle 501 positionné sur le circuit optique intégré 101. L'assemblage de l'adaptateur optique 100 au circuit optique intégré 101 permet d'obtenir ledit faisceau lumineux élargi.

La figure 6 est une vue de côté et en coupe, schématique et partielle, d'une variante du circuit optique intégré 101.

Dans l'exemple représenté, le couplage optique entre le guide d'ondes 201 du circuit optique intégré 101 et l'adaptateur optique 100 s'effectue par un réseau de diffraction situé à l'extrémité du guide 201 et formé par exemple par gravure partielle d'une structure périodique dans le cœur 201C du guide. Ce réseau de diffraction constitue un port optique 205 pour recevoir ou émettre un faisceau lumineux 108.

Dans ce cas, le circuit optique intégré 101 est dépourvu de la cavité 107 et l'adaptateur optique 100 est dépourvu de la partie 111S de la région transparente 111 formant saillie depuis la face 111B et du miroir de renvoi plan 109. À titre d'exemple, l'adaptateur optique 100 ne comprend pas de fonction optique autre que celle mise en œuvre par les miroirs plan 115 et convergent 113 et la région transparente 111.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, l'adaptation du dispositif optique 500 au cas d'un couplage par réseau de diffraction comme exposé précédemment en relation avec la figure 6 est à la portée de la personne du métier à partir des indications de la présente description.

Enfin, la mise en œuvre pratique des modes de réalisation et variantes décrits est à la portée de la personne du métier à partir des indications fonctionnelles données ci-dessus. En particulier, les modes de réalisation décrits ne se limitent pas aux exemples particuliers de matériaux et de dimensions mentionnés dans la présente description.

## Revendications

1. Adaptateur optique (100) comprenant :
- une région transparente (111) ;
- un miroir convergent (113) situé du côté d'une première face (111B) de la région transparente (111) et tourné en regard d'une deuxième face (111T) de la région transparente (111), opposée à la première face (111B) ;
- un premier miroir plan (115) situé du côté de la deuxième face (111T) de la région transparente (111) et tourné en regard de la première face (111B) ;
- un premier port optique (117) situé du côté de la première face (111B) et destiné à être positionné en vis-à-vis d'une extrémité d'un guide d'ondes (201 ; 203) d'un circuit optique intégré (101) ;
- un deuxième port optique (119) situé du côté de la deuxième face (111T) ; et
- un deuxième miroir plan (109) situé sur une partie (111S) de la région transparente (111) formant saillie depuis sa première face (111B), ladite partie (111S) étant destinée à être insérée dans une cavité (107) du circuit optique intégré (101),
l'adaptateur optique (100) étant destiné à assurer une propagation d'un faisceau lumineux (108) entre ladite extrémité du guide d'ondes (201 ; 203) et le deuxième port optique (119), le premier miroir plan (115) et le miroir convergent (113) étant agencés de sorte que le faisceau lumineux (108) se propage entre les premier (117) et deuxième (119) ports optiques, à travers la région transparente (111), par réflexion sur le premier miroir plan (115) et sur le miroir convergent (113), le faisceau lumineux (108) présentant, au niveau du deuxième port optique (119), une taille (d₃) supérieure à celle (d₁) qu'il présente au niveau du premier port optique (117).

2. Adaptateur (100) selon la revendication 1, dans lequel la région transparente (111) comprend en outre au moins un élément de positionnement mécanique (301 ; 401) de l'adaptateur (100) par rapport au circuit optique intégré (101).

3. Adaptateur (100) selon la revendication 2, dans lequel ledit au moins un élément de positionnement mécanique (301 ; 401) forme saillie depuis la première face (111B) de la région transparente (111).

4. Adaptateur (100) selon la revendication 2 ou 3, dans lequel ledit au moins un élément de positionnement mécanique (301 ; 401) comprend au moins un plot (301) dépourvu de fonction optique destiné à prendre appui sur le circuit optique intégré (101).

5. Adaptateur (100) selon l'une quelconque des revendications 2 à 4, dans lequel ledit au moins un élément de positionnement mécanique (301 ; 401) comprend en outre au moins un doigt (401) dépourvu de fonction optique et destiné à être inséré dans une cavité (403) du circuit optique intégré (101).

6. Adaptateur (100) selon l'une quelconque des revendications 1 à 5, dans lequel les premier (117) et deuxième (119) ports optiques sont respectivement adaptés à recevoir et à émettre le faisceau lumineux (108).

7. Adaptateur (100) selon l'une quelconque des revendications 1 à 6, dans lequel la première face (111B) de la région transparente (111) est parallèle à sa deuxième face (111T), le premier miroir plan (115) étant parallèle à la deuxième face (111T).

8. Adaptateur (100) selon l'une quelconque des revendications 1 à 7, dans lequel le deuxième port optique (119) est destiné à être positionné en vis-à-vis d'un connecteur optique (505) dans lequel aboutit une extrémité d'une fibre optique (509).

9. Dispositif optique (500) comprenant un circuit optique intégré (101) et l'adaptateur optique (100) selon l'une quelconque des revendications 1 à 8, l'adaptateur optique (100) étant solidaire mécaniquement du circuit optique intégré (101).

10. Dispositif (500) selon la revendication 9, dans lequel l'adaptateur optique (100) est fixé au circuit optique intégré (101) par une couche de colle (207) optiquement transparente.

11. Dispositif (500) selon la revendication 9 ou 10, comprenant en outre au moins un connecteur optique (505) positionné en vis-à-vis du deuxième port optique (119) et dans lequel aboutit l'extrémité d'une fibre optique (509).
